# EUROPEAN PATENT APPLICATION

(11) **EP 4 491 258 A1**
(43) Date of publication of application: **15.01.2025**
(21) Application number: 23020405.9
(22) Date of filing: 30.08.2023
(51) Int. Cl.: B01D 53/26

(54) **METHOD AND PLANT FOR COOLING A PROCESS GAS**

(30) Priority: 14.07.2023 EP 23020346
(71) Applicant: Linde GmbH, 82049 Pullach (DE)
(72) Inventor: Bub, Andreas, 82049 Pullach (DE); Vaupel, Christian, 82049 Pullach (DE); Voloshchuk, Yury, 82049 Pullach (DE)
(74) Representative: Imhof, Dietmar

(57) **Abstract**

The invention relates to a method for cooling a process gas, the process gas comprising carbon dioxide, wherein the process gas is pre-processed, the preprocessing comprising compressing the gas and after-cooling the gas, wherein, after having been pre-processed, the process gas (b) is cooled in a heat exchanger (122), wherein, after having been cooled, the process gas (c) is depressurized, wherein, after having been depressurized (d), the process gas is used in the heat exchanger (122) as a cooling medium, and wherein, after having been used as a cooling medium, the process gas (e) is provided for further use, and a) wherein, after having been cooled, the process gas is processed in a processing unit (130), and wherein, after having been processed in the processing unit (130), the process gas is used in the heat exchanger (122) as a cooling medium, or b) wherein, after having been used as a cooling medium, the process gas is processed in a processing unit (130), and wherein, after having been processed in the processing unit (130), the process gas (e) is provided for further use. The invention also relates to a corresponding gas processing plant (100).

## Description

The present invention relates to a method for cooling a process gas, in context with compressing and, e.g., drying the gas, and providing the gas for further use, and to a corresponding gas processing plant for cooling a process gas.

### Background of the Invention

In different applications, in particular industrial applications, carbon dioxide or other gas is to be separated and stored or otherwise used. In the context of carbon dioxide (CO2) capture and storage, the terms CO2 sequestration and CCS are used. Carbon dioxide, which is extracted either from the environment or directly from the sources of fossil carbon dioxide emissions of an industrial or energy-related nature, can first be processed and compressed before being transported to a storage site.

Typically, the water-containing or water-saturated carbon dioxide rich gas (it is noted that, typically, carbon dioxide is most times not provided as pure gas; rather, other components can be included; thus, the term "carbon dioxide rich gas" will be used in the following) is compressed from an atmospheric pressure level to either a subcritical pressure level of about 10-50 bar or a supercritical pressure level of about 150-250 bar in several compression steps. The processing of the carbon dioxide rich gas usually takes place after a first compression step to a subcritical pressure level of approx. 10-50 bar. A primary goal of carbon dioxide processing at this stage is the removal of water (drying) to a concentration of less than 50-150 ppmv (ppmv is ppm by volume). Here, the water is typically removed by glycol scrubbing or by adsorption methods (temperature or pressure swing adsorption) before being sent to either further compression to the supercritical pressure level, and transport to the storage site or further utilization facilities.

During compression, the temperature of the carbon dioxide rich gas increases. The resulting compression heat can be removed via heat exchangers against air or cooling water. During cooling, a certain portion of the water present in the raw carbon dioxide rich gas is condensed and removed prior to the drying step. Such cooling process in-between (inter-stage) and/or after compression stages (typically to 30-45°C) cannot remove water entirely from the carbon dioxide rich gas and is aimed at condensing as much water as possible before downstream drying step. This allows for the much more economical sizing of the drying units.

After inter-stage and aftercooling against air or cooling water the water concentration in the carbon dioxide rich gas is typically still at a relatively high level, leading to an uneconomical dimensioning of the downstream drying unit.

To overcome this problem carbon dioxide rich gas can be cooled in a heat exchanger to a minimum temperature level of, preferably, higher than 0°C and colder than 30°C, whereby a large part of the contained water condenses out. The necessary cooling power for carbon dioxide rich gas cooling and water condensation is provided by a chiller package. The condensed water can be separated in a downstream separator and fed to the wastewater system or similar. The now water-depleted carbon dioxide rich gas can be fed to the drying unit and then optionally be compressed to a desired final pressure.

Carbon dioxide rich gas cooling by means of a chiller package with a separate refrigeration circuit requires additional equipment such as compressors, heat exchangers, tanks, instrumentation, etc. The refrigeration process is expensive and additional operating fluids (e.g., refrigerant) are required. This increases the investment and operating costs of the plant. Moreover, the plant availability is reduced due to the chiller package, as the probability of system failure increases, e.g., due to failure of the refrigerant compressor.

Depending on the choice of refrigerant, additional plant requirements may arise, such as the necessity of a flare system or the definition of Ex-zones, which increases the investment costs. Further, certain refrigerants are harmful to the environment if released into the atmosphere, e.g., due to leaks or malfunctions.

In view of this, the objective of the present invention is to provide an improved way for economical and simple cooling of a gas or process gas like carbon dioxide rich gas.

### Disclosure of the invention

This objective is achieved by providing a method for cooling process gas and a gas processing plant for cooling a process gas according to the independent claims. Advantageous further embodiments form the subject matter of the dependent claims and of the subsequent description.

The present invention relates to processing, in particular, cooling, a process gas and a corresponding plant. In the following, the process (or method) and the plant will mainly be described with respect to carbon dioxide rich gas as such process gas, however, other gases can also be used. In general, such process gas can comprise (or be), for example, at least one of: carbon dioxide, natural gas, other hydrocarbons, nitrogen, oxygen.

After having been provided as a feed gas stream, the process gas is pre-processed. This pre-processing comprises compressing the gas and after-cooling the gas. Carbon dioxide rich gas as feed gas, for example, often has a high concentration when leaving a capture process with a pressure of, e.g., 1 to 10 bara. The carbon dioxide rich gas then needs to be compressed and dried before routing to further use (e.g., pipeline transport, liquefaction, chemical usage). To do that, the carbon dioxide rich gas is compressed, using, e.g., a compressor unit. In the compressor unit, the carbon dioxide rich gas will, for example, be gradually compressed in several compressor stages (e.g., four stages for medium pressure, and several stages for supercritical state) to a pressure level required by product specification. In-between the compressor stages the carbon dioxide rich gas can be cooled against air or cooling water down to typically 45°C. As the result, a part of water vapor present in the carbon dioxide rich gas will condense.

After the fourth stage of compressor unit, or after the compressor unit as such, the carbon dioxide rich gas can be withdrawn at medium pressure of, e.g., 46 bar(a) or, in general, e.g., between e.g. 10 and 50 bar(a), and a temperature of, e.g., 130°C.

The hot compressed gas can then be routed to a cooling unit where the gas is cooled down to, e.g., 30 to 35°C. Water or air can e.g. be used for cooling. A part of condensed water vapor can be drawn off and evacuated. The water content of the cooled raw CO2 gas is approx. 2000 ppmv.

This pre-processing can be done using the mentioned compressing unit and cooling unit, both in combination also referred to a compressing and cooling system.

The process gas, after having been pre-processed, is cooled in a heat exchanger. It is noted that the entire gas stream can be fed into the heat exchanger; however, also only part of the gas stream can be fed into the heat exchanger and a remaining part can be bypassed, for example, and afterwards be combined with the part fed into the heat exchanger. After having been cooled (in the heat exchanger), the process gas is depressurized (or expanded), using, e.g., a valve or another depressurizing unit. The process gas can be depressurized to a specified product pressure level. For example, a pressure difference between 2 and 20 bar can be used at a valve for depressurizing. After having been depressurized, the process gas is used in the heat exchanger as a cooling medium. It is noted that the entire gas stream can be fed into the heat exchanger and used as cooling medium; however, also only part of the gas stream can be fed into the heat exchanger and used as cooling medium and a remaining part can be bypassed, for example, and afterwards be combined with the part fed into the heat exchanger. After having been used as the cooling medium, the process gas is provided for further use, e.g., storage or the like. In particular, the process gas can also be dried after having been cooled.

In this way, the previously mentioned chiller package for reaching a lower temperature level and thus a lower water content upstream the drying unit, is replaced by an alternative process control. The existing gas (or carbon dioxide rich gas) compressor and the process gas or carbon dioxide rich gas itself are used as refrigerant. The refrigeration capacity for cooling before the potential drying step includes the depressurizing or expansion step of the process gas to generate the enthalpy drop (Joule-Thomson effect).

No separate refrigerant is required and, thus, no additional equipment is required. The carbon dioxide rich gas, e.g., after having been pre-processed, can be fed to the heat exchanger and cooled down to, e.g., 13°C against the carbon dioxide rich gas itself. The water content then drops to approx. 500-700 ppmv.

It is noted that when different processing steps for the process gas are described within the present application, this implies a specific order of the steps, i.e., which processing step to be performed before (upstream) or after (downstream) another step. This, however, does not exclude additional steps to be performed between two particular steps.

In an alternative, after having been cooled, the process gas is dried in a drying unit, and, after having been dried, the process gas is used in the heat exchanger as a cooling medium. This means that the process gas is dried before being used as the cooling medium. It is noted that other processing of the process gas (in a processing unit) instead of drying can be used, depending on the needs or specific application.

In this case, after having been cooled and before being dried (or processed), the process gas can be depressurized. Alternatively, after having been cooled and after having been dried (or processed), the process gas can be depressurized and used in the heat exchanger as the cooling medium. In other words, the depressurizing can be done before or after the drying or processing unit.

In another alternative, after having been used as the cooling medium, the process gas is dried (or processed) in a drying unit (or processing unit), and after having been dried (or processed), the process gas is provided for further use. In this case, the process gas is used as the cooling medium before the drying (or processing).

In an embodiment, after having been cooled, fluid is removed from the process gas, using a gas separating unit (e.g., a gas separator, or a fluid or water separator). Such process gas separating unit can also be part of the mentioned chilling unit, i.e., the chilling unit can comprise the heat exchanger and the gas separating unit. The process gas can be depressurized before the fluid is removed from the gas. Alternatively, the process gas can be depressurized after the fluid has been removed from the process gas. Thus, the depressurizing unit (valve) can be arranged at the required position.

Further advantages and embodiments of the invention will become apparent from the description and the accompanying drawings.

It should be noted that the previously mentioned features and the features to be further described in the following are usable not only in the indicated combinations, but also in further combinations or taken alone, without departing from the scope of the present invention.

The invention will now be further described with reference to the accompanying drawings, which show a preferred embodiment.

### Brief description of the drawings

- Fig. 1: schematically shows a process according to an embodiment of the invention;
- Fig. 2: schematically shows a process according to another embodiment of the invention;
- Fig. 3: schematically shows a process according to another embodiment of the invention;
- Fig. 4: schematically shows a process according to another embodiment of the invention;
- Fig. 5: schematically shows a part of a process plant according to an embodiment of the invention; and
- Fig. 6: schematically shows a part of a process plant according another embodiment of the invention.

### Detailed description of the drawings

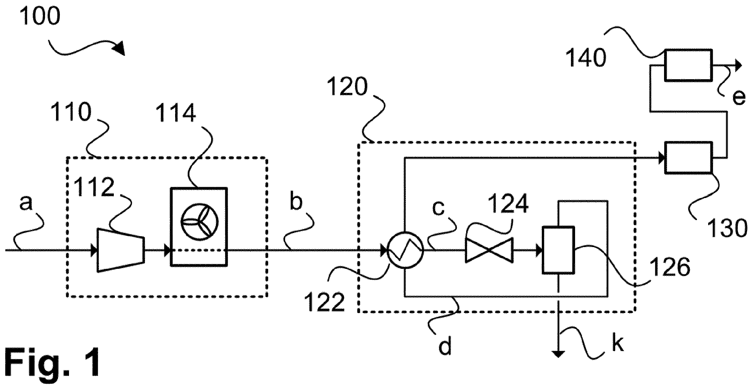

Fig. 1 schematically illustrates a process according to an embodiment of the invention, using a gas processing plant 100. The gas processing plant 100 comprises, by means of example, a compressing and cooling system 110, a chilling unit 120, a processing unit 130 and an optional post-processing and cooling system 140. The processing unit 130 can comprise (or even can be) a drying unit, for example. In particular, the processing unit 130 can require certain pre-cooling upfront.

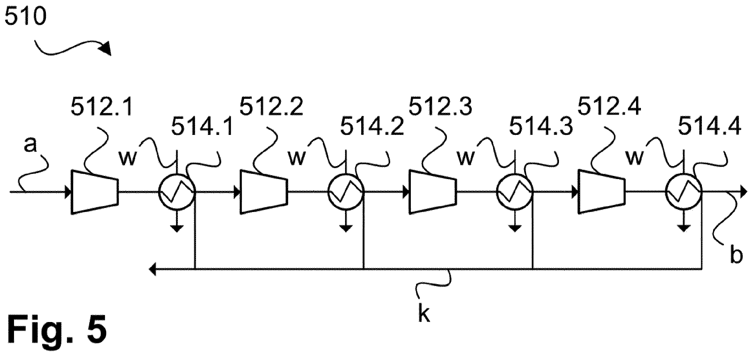

The compressing and cooling system 110 comprises, by means of example, a compressing unit 112 and a cooling unit 114. The compressing unit can, for example, comprise one or more compressors. The cooling unit 114 can, for example, comprise one or more coolers or heat exchangers using water or air, for example. For another example of a compressing and cooling system, see Fig. 5.

The chilling unit 120 comprises, by means of example, a heat exchanger 122, and gas separation unit 126. Further, the chilling unit 120 comprises a depressurizing unit 124, e.g., a valve. It is noted that the depressurizing unit 124 does not necessarily be part of the chilling unit 120 but could also be part of another component or just be part of the gas processing plant 100. For other examples, see below.

The gas to be processed (in particular, cooled), i.e., the process gas, e.g., carbon dioxide or carbon dioxide rich gas, can be provided as a feed gas stream (a) to the compressing and cooling unit 110. In the compressing and cooling unit 110, the process gas is pre-processed, i.e., compressed and after-cooled; note that the cooling of the process gas is called after-cooling as the gas is heated by the compressing and, thus, has to be cooled afterwards. The stream of gas leaving the compressing and cooling unit 110 is called stream (b). The process gas can, before entering the cooling unit 114, have a pressure of, preferably, 10 to 50 bar(a), and a temperature of, e.g., 130°C. In the cooling unit 114, for cooling or after-cooling, the process gas can be cooled to, e.g., 35°C.

The process gas is then fed to the heat exchanger 122 in order to (further) cool down the process gas to, e.g., 15°C. As mentioned above, part of the gas can also be bypassed. The process gas, after having been cooled by the heat exchanger, is called stream (c).

The process gas is then routed through the depressurizing unit or valve 124 such that the process gas is de-pressurized (or expanded). A pressure difference of, e.g., between 2 and 20 bar can be used here. In this way, the necessary refrigeration capacity for using the process gas as cooling medium is generated (Joule-Thomson effect).

Next, the process gas is fed to the gas separation unit 126 where the process gas is separated from water or water vapor (or any other fluid) still present in the process gas. The fluid k, e.g., condensate, can be fed to further processing or the wastewater system or similar. The (remaining) process gas is then fed to the heat exchanger 122, used as cooling medium. As mentioned above, part of the gas can also be bypassed (and, thus, not be used as cooling medium). The depressurized process gas (irrespective of whether or not fluid has been removed) is called stream (d). In this way, the process gas fed to the heat exchanger upstream, as stream (b), is cooled.

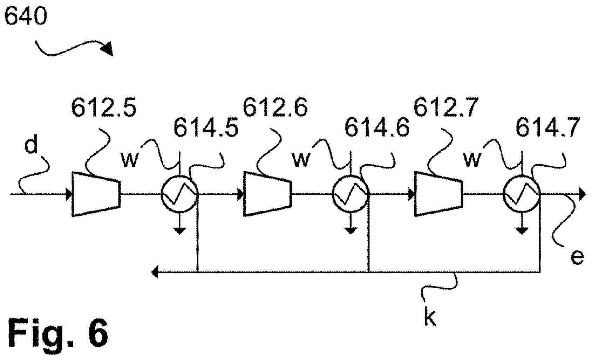

After having been used as the cooling medium, the process gas can be fed, for example, to the drying unit and, after the drying unit, the process gas can be fed to the post-processing and cooling system 140. It is noted that this is an example only; other processing units or even no further processing unit might be used after the process gas having been used as the cooling medium. The post-processing and cooling system 140 can, for example, comprise one or more compressors and one or more coolers or heat exchangers using water, for example. Such further post-processing and cooling system 140 can optionally be used if the process gas has to be further compressed, what can depend on the intended use. For an example of a post-processing and cooling system, see Fig. 6. In general, the process gas, after having been dried or otherwise processed, is called stream (e)

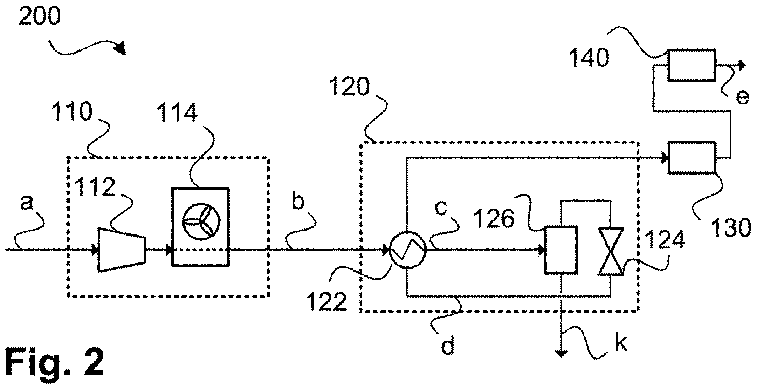

Fig. 2 schematically illustrates a process according to an embodiment of the invention, using a gas processing plant 200. The gas processing plant 200 comprises the same components or units as gas processing plant 100 of Fig. 1; for explanation of the components see Fig. 1. However, the components are arranged differently in order to achieve a different order of processing steps.

The depressurizing unit or valve 124 is arranged after the gas separation unit 126. In this way, the process gas is depressurized after the fluid k has been removed from the process gas, whereas with gas processing plant 100, the process gas is depressurized before the fluid k is removed from the process gas.

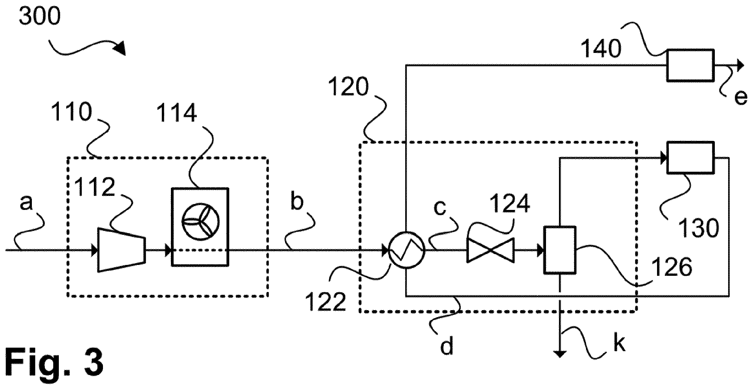

Fig. 3 schematically illustrates a process according to an embodiment of the invention, using a gas processing plant 300. The gas processing plant 300 comprises the same components or units as gas processing plant 100 of Fig. 1; for explanation of the components see Fig. 1. However, the components are arranged differently in order to achieve a different order of processing steps.

After having been cooled, the process gas is fed to the processing unit 130 (e.g., a drying unit) and, after having been processed, the process gas is fed to the heat exchanger 122 and used as the cooling medium.

Another example might be that the depressurizing unit or valve 124 is arranged after the gas separation unit 126, like in gas processing plant 200 of Fig. 2, but before the process gas is fed to the processing unit 130.

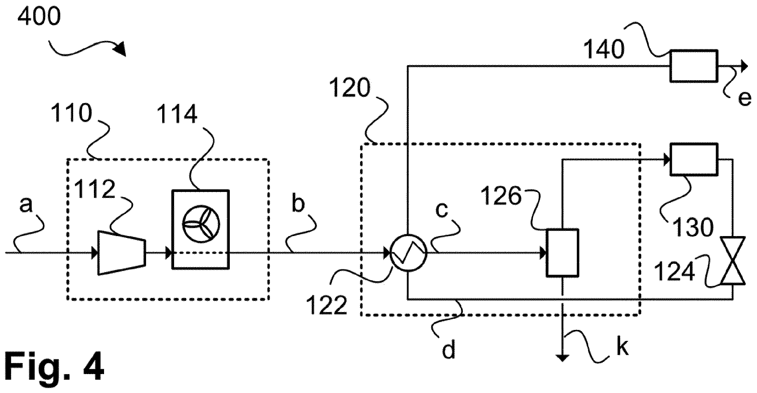

Fig. 4 schematically illustrates a process according to an embodiment of the invention, using a gas processing plant 400. The gas processing plant 400 comprises the same components or units as gas processing plant 100 of Fig. 1; for explanation of the components see Fig. 1. However, the components are arranged differently in order to achieve a different order of processing steps.

After having been cooled, the process gas is fed to the processing unit 130 and, after having been processed, the process gas is fed to the heat exchanger 122 and used as the cooling medium. In addition, the depressurizing unit or valve 124 is arranged after the processing unit 130 but still before the heat exchanger 122.

Fig. 5 schematically illustrates part of a process plant according to an embodiment of the invention. In particular, a compression and cooling unit 510 is shown which can be used as or instead of compression and cooling unit 110 in any of the process plants 100, 200, 300, 400, for example. As for compression and cooling unit 110, the feed gas stream (a) is received therein, and the pre-processed gas stream b is provided.

The compression and cooling unit 510 comprises, by means of example, four stages of compression, having a first compressor or compressor unit 512.1, a second compressor or compressor unit 512.2, a third compressor or compressor unit 512.3, and a fourth compressor or compressor unit 512.4. After each compression stage, a cooling stage is provided, e.g., using a heat exchanger with water (w) as cooling medium. These stages are 514.1, 514.2, 514.3, and 514.4. The last stage or heat exchanger 514.4 can, for example, correspond to the individual cooling unit 114 in any of the process plants 100, 200, 300, 400. Further, fluid k (e.g., condensed water) can be fed to the wastewater system or similar after each stage.

Depending on the required compression of the process gas, a required number of compressors or compression stages with required power can be used.

Fig. 6 schematically illustrates part of a process plant according to an embodiment of the invention. In particular, a post-processing and cooling system 640 is shown which can be used as or instead of post-processing and cooling system 140 in any of the process plants 100, 200, 300, 400, for example. As for post-processing and cooling system 140, the gas stream d is received therein, and the gas stream (e) is provided, e.g., for further use.

The post-processing and cooling system 640 comprises, by means of example, three stages of compression, which can be seen in combination with the four stages of the processing and cooling system 510, for example. The post-processing and cooling system 640 has a fifth compression stage or compressor unit 612.5, a sixth compression stage or compressor unit 612.6, and a seventh compression stage or compressor unit 612.7. After each compressor, a cooling stage is provided, e.g., using a heat exchanger with water (w) as cooling medium. These stages are 614.5, 614.6, and 614.7. Further, fluid k (e.g., condensed water) can be fed to the wastewater system or similar after each stage.

Depending on the required compression of the process gas, a required number of compressors or compression stages with required power can be used. Further note that the numbering of the stages in the post-processing and cooling system 640 is based on the numbers of stages in the processing and cooling system 510 and may, of course, differ depending on the number of stages in the processing and cooling system 510.

## Claims

1. A method for cooling a process gas, the process gas comprising carbon dioxide, wherein the process gas is pre-processed, the pre-processing comprising compressing the gas and after-cooling the gas,
wherein, after having been pre-processed, the process gas (b) is cooled in a heat exchanger (122),
wherein, after having been cooled, the process gas (c) is depressurized,
wherein, after having been depressurized (d), the process gas is used in the heat exchanger (122) as a cooling medium, and
wherein, after having been used as a cooling medium, the process gas (e) is provided for further use, and
a) wherein, after having been cooled, the process gas is processed in a processing unit (130), and wherein, after having been processed in the processing unit (130), the process gas is used in the heat exchanger (122) as a cooling medium, or
b) wherein, after having been used as a cooling medium, the process gas is processed in a processing unit (130), and wherein, after having been processed in the processing unit (130), the process gas (e) is provided for further use.

2. The method of claim 1, wherein, in alternative a), after having been cooled and before being processed in the processing unit (130), the process gas is depressurized.

3. The method of claim 1, wherein, in alternative a), after having been cooled and after having been processed in the processing unit (130), the process gas is depressurized and used in the heat exchanger (122) as a cooling medium.

4. The method of any one of the preceding claims, wherein the processing unit (120) comprises a drying unit, and wherein processing the process gas in the processing unit (130) comprises that the process gas is dried in the drying unit.

5. The method of any one of the preceding claims, wherein, after having been cooled, fluid (k) is removed from the process gas.

6. The method of claim 5, wherein the process gas is depressurized before the fluid (k) is removed from the process gas, or wherein the process gas is depressurized after the fluid (k) has been removed from the process gas.

7. The method of any one of the preceding claims, wherein, after having been processed in the processing unit (130),, the process gas is fed to a post-processing and cooling system (140).

8. The method of any one of the preceding claims, wherein providing the process gas for further use comprises storing the process gas.

9. A gas processing plant (100, 200, 300, 400) for cooling a process gas, the process gas comprising carbon dioxide, the gas process plant comprising a compressing and cooling system (110), a heat exchanger (122), a depressurizing unit (124), and processing unit (130),
wherein the compressing and cooling system (110) is configured to receive the process gas and pre-process the process gas, the pre-processing comprising compressing and after-cooling the process gas,
wherein the heat exchanger (122) is configured to receive the process gas (b) after having been pre-processed and to cool the process gas,
wherein the depressurizing unit (124) is configured to receive the process gas, after having been cooled (c) in the heat-exchanger, and to depressurize the process gas,
wherein the heat exchanger (122) is further configured to receive the process gas (d) after having been depressurized, and to use the process gas as a cooling medium, and
wherein the gas processing plant (100, 200, 300, 400) is configured to provide the process gas (e), after having been used as a cooling medium, for further use and
a) wherein the processing unit (130) is configured to receive the process gas after having been cooled in the heat exchanger, and process the process gas, and wherein the heat exchanger (122) is configured to receive the process gas, after having been processed in the processing unit (130), to use the process gas as a cooling medium, or
b) wherein the processing unit (130) is configured to receive the process gas after having been used as a cooling medium in the heat exchanger, and process the process gas, and wherein the gas processing plant (100, 200, 300, 400) is configured to provide the process gas (e) for further ruse, after having been used as a cooling medium in the heat exchanger.

10. The gas processing plant (100, 200, 300, 400) of claim 9, further comprising a post-processing and cooling system (140), wherein the post-processing and cooling system (140).is configured to receive the process gas after having been processed in the processing unit (130).

11. The gas processing plant (100, 200, 300, 400) of claim 9 or 10, configured to perform the method of any one of claims 1 to 8.
